# EUROPEAN PATENT APPLICATION

(11) **EP 4 660 783 A1**
(43) Date of publication of application: **10.12.2025**
(21) Application number: 25180681.6
(22) Date of filing: 04.06.2025
(51) Int. Cl.: G06F 7/499, G06F 7/50

(54) **SATURATION LOGIC**

(30) Priority: 07.06.2024 GB 202408144
(71) Applicant: Imagination Technologies Limited, Kings Langley Hertfordshire WD4 8LZ (GB)
(72) Inventor: Spreij, Tijmen, Kings Langley, WD4 8LZ (GB); Ferrere, Thomas Pierre Jean, Kings Langley, WD4 8LZ (GB)
(74) Representative: CMS Cameron McKenna Nabarro Olswang LLP

(57) **Abstract**

A first input, comprising a first number of bits, and a second input, comprising a second number of bits greater than the first number, are received and added together to determine a carry value. A risk of integer overflow is determined using a third number, equal to the first number subtracted from the second number, of MSBs of the second input. Using the determined carry value and the determined risk of overflow, it is determined whether the addition of the first input and the second input causes integer overflow. In response to determining that the addition causes integer overflow, an output value comprising the second number of bits is determined. The third number of MSBs of the second input is used as the third number of MSBs of the output value. The first number of LSBs of the output value are saturated using the determined risk of integer overflow.

## Description

### CROSS-REFERENCE TO RELATED APPLICATION

This application claims priority from UK patent application 2408144.0 filed on 07 June 2024, which is herein incorporated by reference in its entirety.

### TECHNICAL FIELD

The present invention relates to addition of inputs of different width. In particular, the present invention relates to saturation logic in binary addition.

### BACKGROUND

In hardware arithmetic, inputs of different width may be added together. When adding together inputs of different width, the output can be set to the same width as the widest input. The result of the addition, however, may exceed the number of bits allocated to the output. This is known as integer overflow. Where integer overflow occurs, the default condition in hardware is for the result of the addition to wrap around. An alternative to wrapping is to saturate the result of the addition based on whether integer overflow has occurred.

The embodiments described below are provided by way of example only and are not limiting of implementations which solve any or all of the disadvantages of known input addition logic.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A first input and a second input are received and added together to determine a carry value. The first input comprises a first number of bits and the second input comprises a second number of bits, which is greater than the first number of bits. A risk of integer over is determined using a third number of most significant bits (MSBs) of the second input. The third number is equal to the first number subtracted from the second number. Using the determined carry value and the determined risk of overflow, it is determined whether the addition of the first input and the second input will cause integer overflow. In response to determining that the addition will cause integer overflow, an output value comprising the second number of bits is determined. The third number of MSBs of the second input is used as the third number of MSBs of the output value. The first number of least significant bits of the output value are saturated using the determined risk of integer overflow.

A first aspect provides a method of adding a first input and a second input in hardware logic to determine an output value, the method comprising: receiving the first input comprising a first number of bits and the second input comprising a second number of bits, wherein the second input is wider than the first input; adding the first input to the first number of least significant bits of the second input to determine a carry value; determining, using a third number of most significant bits of the second input, whether there is a risk of integer overflow, wherein the third number is equal to the first number subtracted from the second number; using the determined carry value and the determined risk of overflow, determining whether the addition of the first input and the second input will cause integer overflow; and in response to determining that the addition will cause integer overflow, determine the output value, wherein the output value comprises the second number of bits, wherein the third number of most significant bits of the second input is used as the third number of most significant bits of the output value, and wherein the first number of least significant bits of the output value are saturated using the determined risk of integer overflow.

In another aspect is provided a method of adding a first input and a second input in hardware logic to determine an output value, wherein adding the first input to the first number of least significant bits of the second input to determine a carry value and determining whether there is a risk of integer overflow are performed in parallel.

In another aspect is provided a method of adding a first input and a second input in hardware logic to determine an output value, further comprising: in response to determining that the addition will not cause integer overflow, determining the output value, wherein the output value comprises the second number of bits, wherein the third number of most significant bits of the second input is adjusted using the carry value to provide the third number of most significant bits of the output value, and wherein the first number of least significant bits of the addition of the first input and the first number of least significant bits of the second input are used as the first number of least significant bits of the output value.

The methods of the aspects described above may be computer implemented.

A second aspect provides an apparatus comprising: a first hardware logic block, wherein the first hardware logic block is configured to receive a first input comprising a first number of bits and a second input comprising a second number of bits, wherein the second input is wider than the first input, wherein the first hardware logic block is configured to provide the first input and first number of least significant bits of the second input to an adder, wherein the hardware logic block is configured to provide a third number of most significant bits of the second input to a first determining block, wherein the third number is equal to the first number subtracted from the second number; the adder, wherein the adder is configured to add the first input to the first number of least significant bits of the second input to determine a carry value and wherein the adder is configured to provide the carry value to a second determining block; the first determining block, wherein the first determining block is configured to receive the third number of most significant bits of the second input, wherein the first determining block is configured to determine a risk of integer overflow from the third number of most significant bits of the second input, and wherein the first determining block is configured to provide the determined risk of integer overflow to the second determining block; the second determining block, wherein the second determining block is configured to receive the determined carry value and the determined integer overflow risk, wherein the second determining block is configured to use the determined carry value and the determined integer overflow risk to determine whether integer overflow will occur, wherein in response to determining that integer overflow will occur, the second determining block is configured to provide an indication to a third determining block that integer overflow will occur; the third determining block, wherein the third determining block is configured to determine an output value of the addition of the first input and the second input, wherein the output value comprises the second number of bits, wherein the third determining block is configured to use third number of most significant bits of the second input as the third number of most significant bits of the output value, wherein the third determining block is configured to saturate the first number of least significant bits of the output value using the determined risk of integer overflow and wherein the third determining block is configured to provide the output value to a second hardware logic block; and the second hardware logic block, wherein the second hardware logic block is configured to receive the output value from the third determining block.

The adder may be configured to add the first input to the first number of least significant bits of the second input to determine a carry value in parallel to the first determining block being configured to determine a risk of integer overflow from the third number of most significant bits of the second input.

The apparatus may further comprise: a fourth determining block; and a third hardware logic block, wherein: in response to determining that integer overflow will not occur, the second determining block is configured to provide an indication to the fourth determining block that integer overflow will not occur; the fourth determining block is configured to determine an output value of the addition of the first input and the second input, wherein the output value comprises the second number of bits; the fourth determining block is configured to adjust the third number of most significant bits of the second input using the carry value to provide the third number of most significant bits of the output value; and the fourth determining block is configured to use the first number of least significant bits of the addition of the first input and the first number of least significant bits of the second input as the first number of least significant bits of the output value.

The apparatus may further comprise: a fifth determining block, wherein the fifth determining block is configured to: determine a first estimate value, wherein the first estimated value comprises the third number of bits, wherein the first estimated value is equal to the third number of most significant bits of the second input; determine a second estimated value, wherein the second estimated value comprises the third number of bits and wherein the second estimated value is equal to the first estimated value incremented by 1 at the least significant bit of the second estimated value; determine a third estimated value, wherein the third estimated value comprises the third number of bits and wherein the third estimated value is equal to the first estimated value decremented by 1 at the least significant bit of the third estimated value; in response to determining that there is no risk of positive integer overflow and the carry value corresponds to an increase, use the second estimated value as the third number of most significant bits of the output value; in response to determining that there is no risk of negative integer overflow and the carry value corresponds to a decrease, use the third estimated value as the third number of most significant bits of the output value; and otherwise, use the first estimated value as the third number of most significant bits of the output value.

The first input may be a signed input.

The adder may be configured to add the first input to the first number of least significant bits of the second input to determine the carry value further comprises the adder being configured to add a residual sign extension to the first input and the first number of least significant bits of the second input, and wherein the adder is further configured to: map the determined carry value to a predetermined mapping of carry values, wherein the predetermined mapping of carry values indicates a value to be added to the third number most significant bits of the second value; and use the indicated value from the mapped determined carry value and the determined risk of overflow to determine the output value.

The adder may be further configured to: map the determined carry value to a predetermined mapping of carry values, wherein the predetermined mapping of carry values indicate a value to be added to the third number most significant bits of the second value; invert a second most significant bit of the addition of the first input and the first number least significant bits of the second input; use the indicated value from the mapped determined carry value, the determined risk of overflow and the inverted addition of the first input and the first number least significant bits of the second input to determine the output value.

In another aspect, the adder is configured to add the first input to the first number of least significant bits of the second input to determine a carry value in parallel to the first determining block being configured to determine a risk of integer overflow from the third number of most significant bits of the second input.

In another aspect is provided an apparatus further comprising: a fourth determining block; and a third hardware logic block, wherein: in response to determining that integer overflow will not occur, the second determining block is configured to provide an indication to the fourth determining block that integer overflow will not occur; the fourth determining block is configured to determine an output value of the addition of the first input and the second input, wherein the output value comprises the second number of bits; the fourth determining block is configured to adjust the third number of most significant bits of the second input using the carry value to provide the third number of most significant bits of the output value; and the fourth determining block is configured to use the first number of least significant bits of the addition of the first input and the first number of least significant bits of the second input as the first number of least significant bits of the output value.

In a third aspect is provided a processing system which is configured to perform a method of adding a first input and a second input in hardware logic to determine an output value, the method comprising: receiving the first input comprising a first number of bits and the second input comprising a second number of bits, wherein the second input is wider than the first input; adding the first input to the first number of least significant bits of the second input to determine a carry value; determining, using a third number of most significant bits of the second input, whether there is a risk of integer overflow, wherein the third number is equal to the first number subtracted from the second number; using the determined carry value and the determined risk of overflow, determining whether the addition of the first input and the second input will cause integer overflow; and in response to determining that the addition will cause integer overflow, determine the output value, wherein the output value comprises the second number of bits, wherein the third number of most significant bits of the second input is used as the third number of most significant bits of the output value, and wherein the first number of least significant bits of the output value are saturated using the determined risk of integer overflow.

Apparatus and processing systems described herein may be embodied in hardware on an integrated circuit. There may be provided a method of manufacturing, at an integrated circuit manufacturing system, a processing system. There may be provided an integrated circuit definition dataset that, when processed in an integrated circuit manufacturing system, configures the system to manufacture a processing system. There may be provided a non-transitory computer readable storage medium having stored thereon a computer readable description of a processing system that, when processed in an integrated circuit manufacturing system, causes the integrated circuit manufacturing system to manufacture an integrated circuit embodying a processing system.

There may be provided an integrated circuit manufacturing system comprising: a non-transitory computer readable storage medium having stored thereon a computer readable description of the processing system; a layout processing system configured to process the computer readable description so as to generate a circuit layout description of an integrated circuit embodying the processing system; and an integrated circuit generation system configured to manufacture the processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
FIG. 1 shows a flow diagram of an example method in hardware logic for adding together inputs of different width;
FIG. 2 shows a schematic diagram of an example apparatus for adding together inputs of different width;
FIG. 3 shows a schematic diagram for adding together inputs of different width;
FIG. 4 shows a schematic diagram for transforming a signed input;
FIG. 5 shows a schematic diagram for adding together inputs of different width;
FIG. 6 shows a schematic diagram for adding together inputs of different width;
FIG. 7 shows a schematic diagram for adding together inputs of different width in a multiply-accumulator component;
Figure 8 shows a computer system in which a graphics processing system is implemented; and
Figure 9 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

When adding together inputs of different width, the output can be set to the same width as the widest input. By setting the number of bits allocated to the output of an addition to be the same width as the widest input of the addition, the memory allocated to the output is predictable and the output value may be used in an iterative process. For example, following an addition, the result provided in the output may be fed back into the successive addition as the widest input.

However, when adding together inputs of different width, there is a risk that the addition of the inputs exceeds the range of values representable in the number of bits allocated to the output value. The exceeding of the range of represented values is known as integer overflow. Where the result of the addition exceeds a maximum value representable in the number of bits allocated to the output value, this is referred to herein as positive integer overflow. Where the result of the addition subceeds a minimum value representable in the number of bits allocated to the output value, this is referred to herein as negative integer overflow.

Typically, to determine whether integer overflow has occurred, and, therefore, whether to perform saturation, an interim value that is wide enough to accommodate the sum of the inputs at all possible values is used. The width of the interim value is selected such that when adding the plurality of inputs, the sum of the inputs will not cause integer overflow. For example, in the case of two inputs, the interim value will be at least 1 bit wider than the widest input. The inputs are sign extended to the width of the interim value and added together to provide the interim value. The resulting interim value is compared to a maximum and/or minimum value to determine whether positive/negative integer overflow has respectively occurred. The maximum/minimum values are defined by the number of bits of the desired output, for example, if the desired input is intended to be as wide as the widest input. If it is determined that integer overflow has occurred (either positive or negative), gates are then applied to each bit of the output to force the output to saturation value.

As typical methods of determining whether integer overflow has occurred requires waiting for the entire addition to be resolved, such methods lead to a long critical path. To compensate for the delays caused by the long critical path, the drive strength of gates along the critical path is increased. This increase leads to larger transistor sizes which consequently increases the area of the hardware. Moreover, as the determination that integer overflow has occurred is only made after the addition has been resolved, additional gates for each bit are required to force the respective bits such that the output is saturated. This too increases the critical path and the area of the hardware used to perform the addition.

To overcome the above-mentioned problems, the present technology provides a novel method and apparatus for performing addition of inputs, which reduces the area of the hardware and the critical path of the addition.

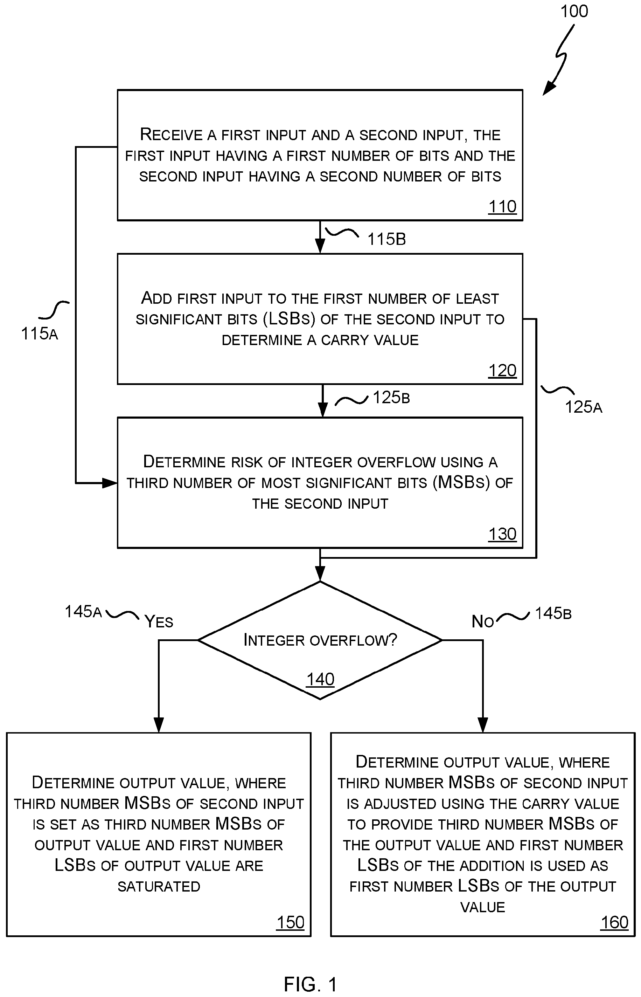

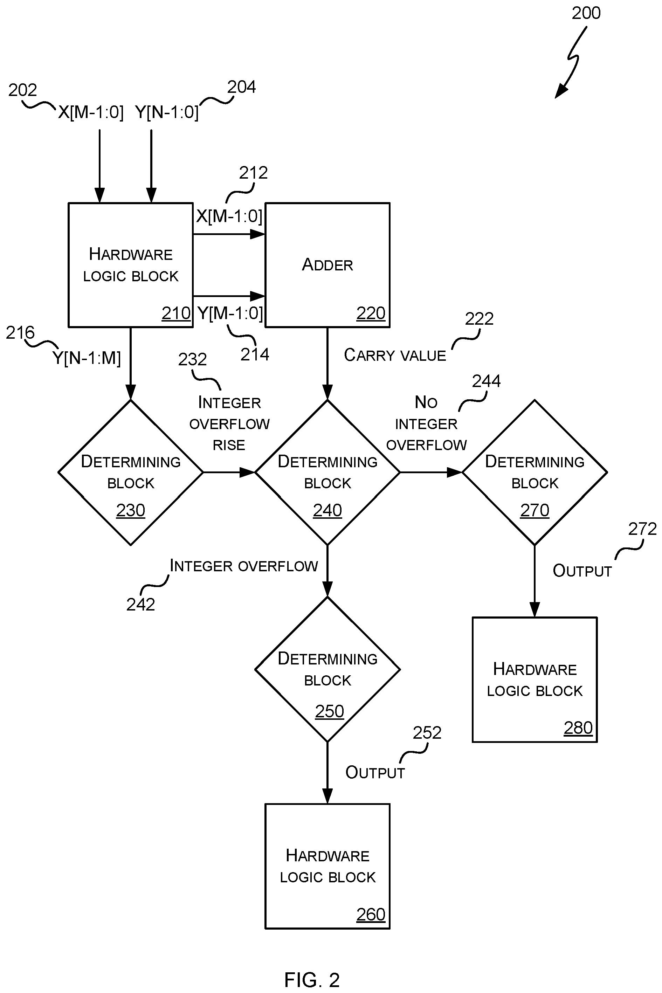

FIG. 1 shows a flow diagram 100 of an example method, that may be implemented in hardware logic, for adding together inputs of different width. The example method depicted in the flow diagram of FIG. 1 may be implemented in the example apparatus 200 depicted in the schematic diagram of FIG. 2. In FIG. 1, a first input and a second input are received 110. The first input has a first number of bits and the second input has a second number of bits. The second number of bits is larger than the first number of bits such that the second input is wider than the first input.

The first input is added 120 to the first number of least significant bits (LSBs) of the second input to determine a carry value. As used herein, a carry value is a value which is determined from the addition of the first input and the first number LSBs of the second input which influence how the value of a third number of most significant bits (MSBs) of the second input are adjusted, where the third number is equal to the first number subtracted from the second number. The carry value may be a positive value greater than zero, zero or a negative value. Additionally, the carry value may be determined from one or more most significant bits (MSBs) of the sum of the first input and the first number of LSBs of the second input.

A risk of integer overflow is determined 130 using a third number MSBs of the second input (e.g. by analysing the values of each of the third number MSBs). As depicted in FIG. 1, the risk of integer overflow may be determined 130 in parallel 115A, 125A to the determination 120 of the carry value or may be determined following 125B the addition 115B of the first and second input. As another alternative, the risk of integer overflow may be determined prior to the addition 120 of the first input and first number LSBs of the second input.

Using the determined carry value 120 and the determined risk of integer overflow 130, it is determined 140 whether integer overflow will occur when the first input and the second input are added together. In response to determining that integer overflow will occur 145A, an output value is determined 150. The output value is of the same width as the widest input, which is a second number of bits in the example shown in FIG. 1. Where it is determined that integer overflow will occur 145A, the third number MSBs of the second input, where the third number is equal to the first number subtracted from the second number, is set as the third number MSBs of the output value. The first number of LSBs of the output value are saturated. As used herein, saturation comprises setting the values to a maximum (e.g. all 1s) or minimum value (e.g. all 0s) in response to determining that integer overflow will occur. For example, where it is determined that negative integer overflow will occur, the first number LSBs of the output value may be set to all 0s and where it is determined that positive integer overflow will occur, the first number LSBs of the output value may be set to all 1s.

In response to determining that integer overflow will not occur 145B, an output value is determined 160. The output value determined in response to determining that integer overflow will not occur 145B is also the same width as the second input. The first number LSBs of the addition of the first input and the first number LSBs of the second input are used as the first number LSBs of the output value. The third number MSBs of the second input are adjusted using the carry value and this adjusted value is used as the third number MSBs of the output value. For example, where the carry value corresponds to an increase, the third number MSBs of the second input are increased according to the carry value. Similarly, if the carry value corresponds to a decrease, the third number MSBs of the second input are decreased according to the carry value. If the carry value corresponds to no change, then the third number MSBs of the second input are used directly.

The disclosed technology uses less logic gates, which provides a saving in dynamic logic. As such, there are less wires which switch between a high and low voltage, leading to an expense of less energy on average during operation. Moreover, as the delay is reduced compared to conventional methods of binary addition. Owing to the reduction in delay, the gates require a smaller drive strength which enables the transistors to be reduced. In addition to smaller transistors decreasing the area of the hardware used in performing the binary addition, smaller transistors also result in lower power leakage, which is especially important where a component is idle for long durations.

Referring now to FIG. 2, a schematic diagram of an example apparatus for adding together inputs of different width according to the present technology is depicted. The method of the flow diagram of FIG. 1 may be implemented in the apparatus shown in FIG. 2. In FIG. 2, a first input X[M-1:0] 202 and a second input Y[N-1:0] 204 are received at hardware logic block 210. X[M-1:0] is an input consisting of M bits. In 0 indexing, X[M-1:0] denotes that all M bits are selected, from the least significant (0^{th} indexed) bit to the most significant (M-1^{th} indexed) bit. Y[N-1:0] is an input consisting of N bits, where N is greater than M. In 0 indexing, Y[N-1:0] denotes that all N bits are selected, from the least significant (0^{th} indexed) bit to the most significant (N-1^{th} indexed) bit. From the hardware logic block 210, X[M-1:0] 212 and Y[M-1:0] 214, where Y[M-1:0] is the M least significant bits (LSBs) of Y, are passed to adder 220.

At the adder 220, X[M-1:0] 212 and Y[M-1:0] 214 are added together to determine a carry value 222, such as the carry value described above in relation to FIG. 1. Y[M-1:0] denotes that the M-1^{th} indexed bit to the 0^{th} indexed bit of Y is selected, which are the M LSBs of Y. The determined carry value 222 is provided to determining block 240 by the adder 220.

Either in parallel to, prior to, or following, the determination of the carry value 222, a risk of integer overflow is determined at determining block 230. To determine the risk of integer overflow, the N-M MSBs of Y[N-1:0], depicted as Y[N-1:M] 216, are provided to the determining block 230 from the hardware logic block 210. The determining block uses this value to determine whether there is a risk of integer overflow and outputs the determined risk of integer overflow 232 to determining block 240. The determined risk may indicate no overflow risk, a positive integer overflow risk or a negative integer overflow risk.

At determining block 240, the carry value 222 and the determined risk of integer overflow 232 are used to determine whether the addition of X[M-1:0] and Y[N-1:0] will lead to integer overflow.

For example, if Y[N-1:M] is a maximum positive value, determining block 230 will identify a positive integer overflow risk. If, in combination with this, the carry value corresponds to a positive value, the addition of X[M-1:0] and Y[N-1:0] will lead to positive integer overflow. Equally, if Y[N-1:M] is a minimum negative value, determining block 230 will identify a negative integer overflow risk. If, in combination with this, the carry value corresponds to a negative value to be added to Y[N-1:M], the addition of X[M-1:0] and Y[N-1:0] will lead to negative integer overflow.

If at determining block 240 it is determined that integer overflow will occur 242, determining block 250 determines an output value 252. Output value 252 may be determined in the same way as depicted in operation 150 of FIG. 1, as described above. The determined output value 252 may be passed to a hardware logic block 260.

If at determining block 240 it is determined that no integer overflow will occur 244, determining block 270 determines an output value 272. Output value 272 may be determined in the same way as depicted in operation 160 of FIG. 1, as described above. The determined output value 272 may be passed to a hardware logic block 280.

By segmenting the second input into two portions (as described above), the first portion which is the same width as the sum of the one of more inputs to which the second, wider input is being added, integer overflow is determined without having to wait for the entire sum to be resolved. Using the determined carry value and risk of integer overflow, whether the sum of at least two inputs will cause integer overflow is determined prior to the entire sum being resolved, thereby reducing the critical path of the addition. This also avoids having to explicitly force the third number of most significant bits of the widest input to a certain value, which saves gating (and hence area). Moreover, an interim value of greater width than the widest input is no longer needed to process the addition as the present technology determines whether integer overflow occurs without having to resolve the entire addition, leading to a saving in area.

Furthermore, as the output is of the same width as the widest input, the output can be fed back as the next input in a loop, which is especially useful for neural network implementations or matrix multiplications.

Additionally, as the addition of the first and second inputs is split into two parts, the addition may be parallelised. This is because the determination of the carry value and of the risk of integer overflow are not dependent on each other. By parallelising the addition, additional savings in time and in the critical path are achieved.

In some examples, using the terminology used in reference to FIG. 1, the third number MSBs of the output value may be pre-computed. For example, using the third number MSBs of the second input, three estimated values may be computed. The width of the three estimates are each the third number of bits. The first estimated value is equal to the third number MSBs of the second input. The second estimated value is computed to be equal to the first estimated value incremented by 1 at the least significant bit of the second estimated value. The third estimated value is computed to be equal to the first estimated value decremented by 1 at the least significant bit of the third estimated value.

In response to determining that there is no risk of positive integer overflow and that the determined carry value corresponds to an increase, the second estimated value is used as the third number of most significant bits of the output value. In response to determining that there is no risk of negative integer overflow and that the determined carry value corresponds to a decrease, the third estimated value is used as the third number of most significant bits of the output value. Otherwise, the first estimated value is used as the third number of most significant bits of the output value. In this way, the estimated values may be computed whilst the risk of integer overflow and whilst the carry value are being determined, thereby increasing parallelism. Therefore, once the carry value and risk of integer overflow are determined, the value for the third number MSBs of the output value will be available.

Whilst FIGs. 1 and 2 depict an addition of a first input and a second input, it is understood that this is a simplified representation of an addition between inputs where one input (the second input/ Y[N-1:0] in FIGS. 1 and 2) is wider than the other input(s). In some examples, the first input may be considered to be a set of a plurality of inputs. That is, the first input may be replaced by a set of inputs. All rows of the plurality of inputs which belong to the first input and the first number LSBs of the second (wider) input are summed together in a single addition. Such a plurality of inputs may instead be added together to provide a first input prior to being added to a second wider input. As another example, the first input or X[M-1:0] as used in FIGS. 1 and 2 may be a dot product of two vector inputs, the result of the dot product being used as the first input or X[M-1:0].

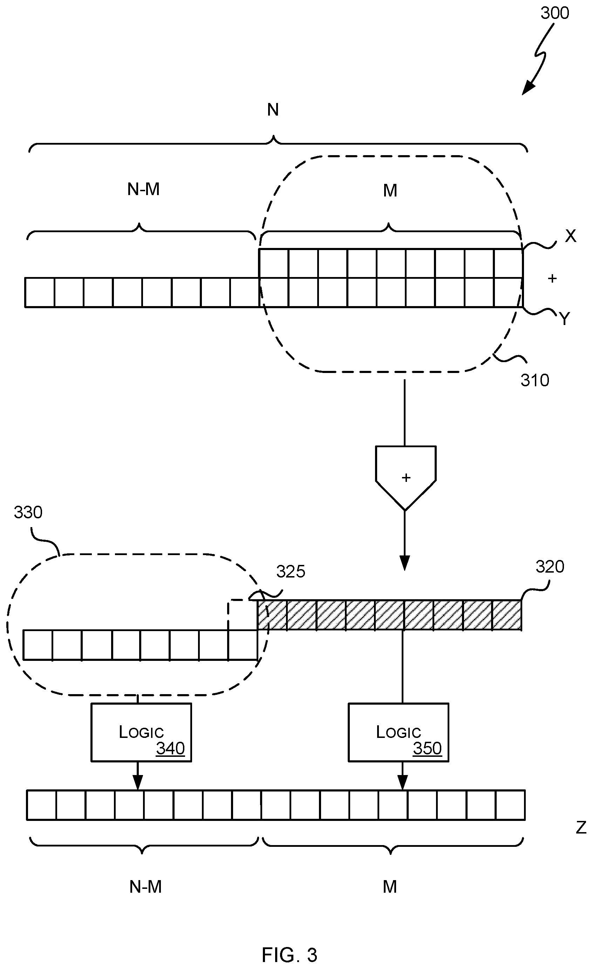

The inputs which are being added to each other may be signed or unsigned. Signed inputs may be positive or negative whilst unsigned inputs are only ever positive. FIG. 3 shows a schematic diagram 300 for adding together inputs of different width using the methods described above. In FIG. 3, both the first input X and the second input Y are unsigned values. Input X comprises M bits and input Y comprises N bits, with N being greater than M.

The M bits of X are added 310 to the M least significant bits of Y to provide an interim output 320, which includes M least significant bits of the interim output 320 as well a carry value 325 at the most significant bit of the interim output 320. As both X and Y are unsigned, the carry value can either be 0 or 1. Using the N-M most significant bits of Y, a risk of integer overflow is determined. As both X and Y are unsigned, there is no risk of negative integer overflow. Therefore, in an unsigned implementation, it is sufficient to check for a risk of positive integer overflow. As mentioned above, the determination of the carry value 325 and the risk of integer overflow may be determined in parallel or in succession to each other.

The N-M MSBs of Y and the carry value 325 are together 330 provided to hardware logic 340. If there is a risk of positive integer overflow, hardware logic 340 gates the carry value 325 and the N-M MSBs of Y are used as the N-M MSBs of Z, which is an output value of equal width to the widest input value Y. If there is no risk of positive integer overflow, the hardware logic 340 adds the carry value 325 to the N-M MSBs of Y to provide the N-M MSBs of Z. In parallel, hardware logic receives the M LSBs of the interim value 320. If it is determined that there will be positive integer overflow when the carry value 325 is added to the N-M MSBs of Y, hardware logic 350 forces the M LSBs of Z to be a maximum value, which will be M 1s. If there will not be any positive integer overflow, the M LSBs of the interim value 320 are used directly as the M LSBs of Z.

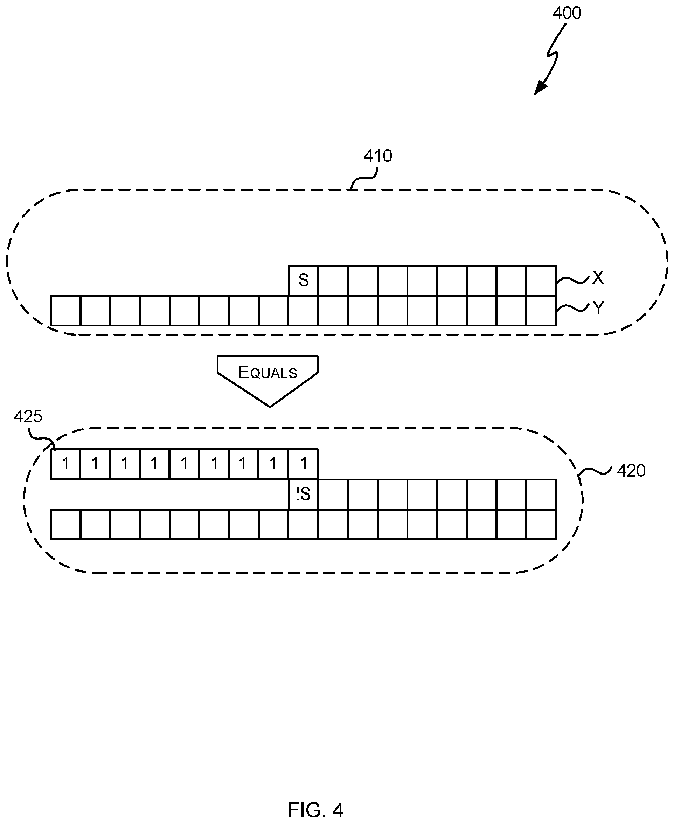

Where at least one of the inputs in an addition is signed, the addition may be performed as if all inputs were unsigned by manipulating the bits in the addition. FIG. 4 illustrates an example 400 in which a first input X is signed and a second input Y is unsigned and the methods described above are used. The most significant bit of signed input X is written as "s" in example 410. The addition shown in example 410 is equal to the addition shown in example 420. To transform the addition shown in example 410 to the addition shown in example 420, the most significant bit of input X is inverted, as depicted by "!s" in example 420 of FIG. 4. Additionally, a sign extension of 1s 425 which starts at the most significant bit of X and which extends to the most significant bit of Y, and which equals a value of -1 left-shifted to the position of the most significant bit of X, is introduced.

The introduction of the sign extension bits 425 to represent the signed value in a way that can be added as if it were unsigned, as shown in example 420, can lead to having to provide an interim value of width greater than the width of the widest bit, which requires additional memory in hardware. However, the additional sign extension bits can be removed conceptually by using a compensation value.

As used herein, a compensation value comprises one or more bits which are added at a position in the sum of a plurality of inputs, wherein the position is at a position along the sign extension bits. By adding the compensation value at a position which overlaps one of the plurality of sign extension bits, all sign extension bits above the position of the compensation value are removed, thereby simplifying the addition of the plurality of inputs. Once the compensation value is used to simplify the addition, a value equal to the compensation value is subtracted at the same position at which the compensation value was added. This results in no net change to the original addition of the inputs but results in a simplification of the calculation of the output and a saving in area used to calculate the output.

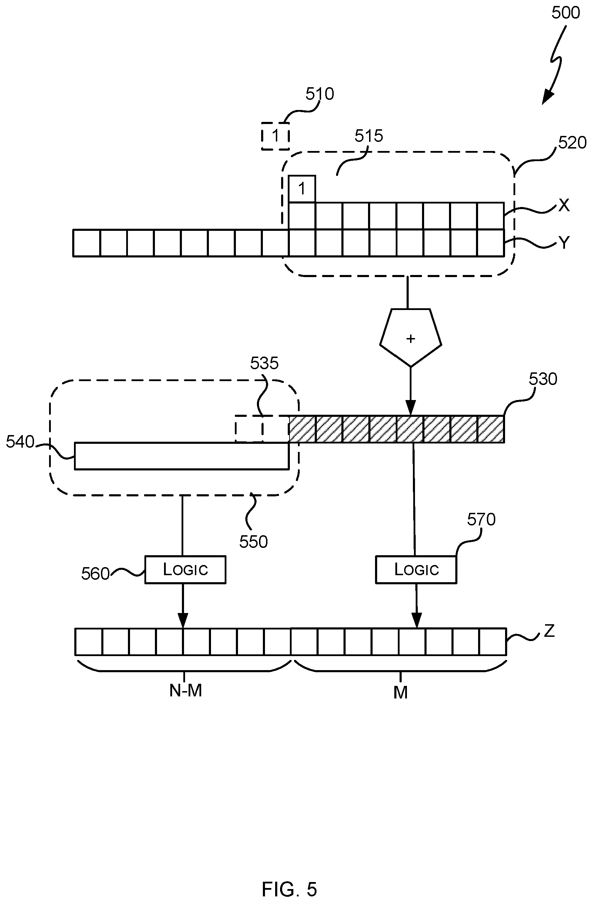

FIG. 5 illustrates an example 500 in which a first input X is added to a second input Y. Similarly to FIG. 3, X comprises M bits and Y comprises N bits, with N being greater than M. In this example, X is signed and Y is unsigned. Compared to the generalisation shown in example 420 of FIG. 4, a compensation value 510 is added. In FIG. 5, the compensation value is a single bit which is added at a position equal to the M+1 LSB of Y or at position M in 0^{th} indexing. The addition of the compensation value 510 at this position results in the sign extension bits 425 depicted in FIG. 4 at the position of the N-M MSBs of Y being removed. A single sign extension bit 515 remains at the position of the most significant bit of X, which is at the position of the M^{th} LSB (or at position M-1 in 0^{th} indexing).

Owing to the sign extension bit 515, the addition 520 of X and the M LSBs of Y also includes the addition of the sign extension bit 515. The addition of X, the M LSBs of Y and sign extension bit 515 provides the interim value 530. As input X comprises M bits, the M LSBs of Y comprise M bits and the sign extension bit 515 is at the position of the MSB of X, the interim value 530 may be up to 2 bits wider than M. These additional two bits which are wider than M represent the carry value 535 of the addition 520. Since the carry value 535 in can be two bits wide, this leads to three possible values, 00, 01 and 10. It is not possible to obtain the value 11 in this configuration as if X and the M LSBs of Y are at their maximum values, the addition of X and the M LSBs of Y lead to a single carry bit. In this maximum scenario, the addition of the sign extension bit 515 adds a further carry bit. Therefore, the maximum value of the carry bits at the position of the MSB of X is 2, which results in 10.

To account for the compensation value 510 added at the position of the M+1 LSB of Y, the same compensation value 510 is deducted from carry value 535 at the same position at which the compensation value 510 was originally added. As the possible values for the carry value 535 were 00, 01 and 10, and as the compensation value 510 was added at the position of the least significant bit of the carry value 535, to obtain an adjusted carry value, the compensation value 510 of 01 is subtracted from the possible carry values. This adjustment leads of a carry value 535 that can have the value 11 (which is -1 in 2's complement), 00 or 01. Therefore, once the compensation has been accounted for, the carry value 535 can either have the values -1 ,0 or 1. An adjusted carry value of -1 is indicative of a decrease in value of the N-M MSBs of Y, an adjusted carry value of 0 is indicative of no change to the N-M MSBs of Y and an adjusted carry value of 1 is indicative of an increase in value of the N-M MSBs of Y.

Either serially or in parallel to the addition of X, the M LSBs of Y and the compensation bit 515, the N-M MSBs of Y are checked to determine whether there is a risk of integer overflow. For example, if the MSB of Y is 0 and the remaining bits of the N-M MSBs of Y are all 1, there is a risk of positive integer overflow. If the MSB of Y is 1 and the remaining bits of the N-M MSBs of Y are all 0, there is a risk of negative integer overflow.

The adjusted carry value, the N-M MSBs of Y 540 and the determined risk of integer overflow are provided 550 to logic block 560. If the adjusted carry value is -1 and there is no determined risk of negative integer overflow, the logic block 560 decrements the N-M MSBs of Y by 1 and this decremented value is used as the N-M MSBs of the output value Z. If the adjusted carry value is 1 and there is no determined risk of positive integer overflow, the logic block 560 increments the N-M MSBs of Y by the adjusted carry value of 1 and this incremented value is used as the N-M MSBs of Z. Otherwise, the logic block sets the N-M MSBs of Z as the N-M MSBs of Y.

Either in parallel, or serially to, the setting of the N-M MSBs of Z, the M LSBs of Z are determined by logic block 570. The M LSBs of the interim value 530 and the adjusted carry value are provided to the logic block 570. If the adjusted carry value is -1 and there is a determined risk of negative integer overflow, the M LSBs of Z are saturated to all 0s by the logic block 570. If the adjusted carry value is 1 and there is a determined risk of positive integer overflow, the M LSBs of Z are saturated to all 1s by the logic block 570.

As an alternative to the method described above in relation to FIG. 5, rather than physically adding the compensation value 510 to the sign extended example 420 shown in FIG. 4, the result of the addition of the compensation value 510 may be directly applied to the received inputs X and Y. In this example, no compensation value 510 is added to the received inputs X and Y, but a residual sign extension bit of value 1 515 is added at the position of the most significant bit of X.

The residual sign extension bit 515 is added to X and the M LSBs of Y as described above to provide interim value 530. As described above, since input X comprises M bits, the M LSBs of Y comprise M bits and the residual sign extension bit 515 is at the position of the MSB of X, the interim value 530 may be up to 2 bits wider than M. These additional two bits which are wider than M represent the carry value 535 of the addition 520. Since the carry value 535 can be two bits wide, this leads to three possible values, 00, 01 and 10. It is not possible to obtain the value 11 in this configuration as if X and the M LSBs of Y are at their maximum values, the addition of X and the M LSBs of Y lead to a single carry bit. In this maximum scenario, the addition of the sign extension bit 515 adds a further carry bit. Therefore, the maximum value of the carry bits at the position of the MSB of X is 2, which results in 10.

To account for the compensation value 510 which was conceptually added at the position of the M+1 LSB of Y, the same compensation value 510 may be conceptually deducted from the carry value 535 by creating a mapping of the determined carry value 535 to a true carry value, which is the carry value which would have been determined had the compensation value 510 not been added. As described above, it was shown that the determined carry value of 0 mapped to -1, the determined carry value of 1 mapped to 0 and the determined carry value of 2 mapped to 1.

The determined carry value 535, the N-M MSBs of Y 540 and the determined risk of integer overflow are provided 540 to logic block 560. If the determined carry value 535 is 0 and there is no determined risk of negative integer overflow, the logic block 560 decrements the N-M MSBs of Y by 1 and this decremented value is used as the N-M MSBs of the output value Z. If the determined carry value 535 is 2 and there is no determined risk of positive integer overflow, the logic block 560 increments the N-M MSBs of Y by the adjusted carry value of 1 and this incremented value is used as the N-M MSBs of Z. Otherwise, the logic block sets the N-M MSBs of Z as the N-M MSBs of Y.

Either in parallel, or serially to, the setting of the N-M MSBs of Z, the M LSBs of Z are determined by logic block 570. The M LSBs of the interim value 530 and the determined carry value 535 are provided to the logic block 570. If the determined carry value 535 is 0 and there is a determined risk of negative integer overflow, the M LSBs of Z are saturated to all 0s by the logic block 570. If the determined carry value 535 is 2 and there is a determined risk of positive integer overflow, the M LSBs of Z are saturated to all 1s by the logic block 570.

By using the result of how the addition of the inputs X and Y is changed by adding the conceptual compensation bit 510 and mapping the determined carry value 535 to a true carry value which would have been obtained had the conceptual compensation bits not been added, the hardware logic used in the present technology is reduced as an adder is not used to physically add and subtract the compensation bit 510.

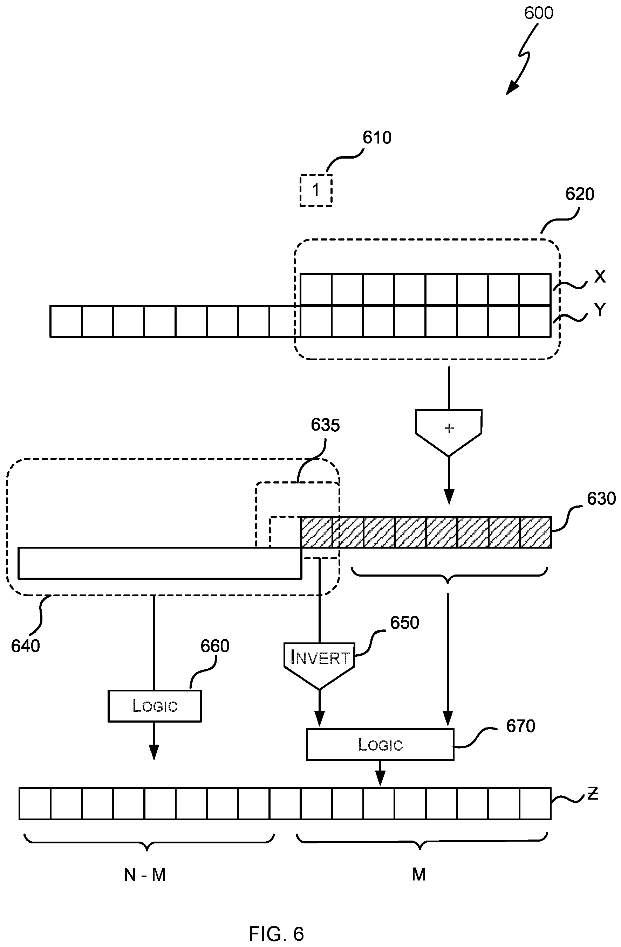

FIG. 6 illustrates another example 600 in which a first input X is added to a second input Y. Similarly to FIG. 3, X comprises M bits and Y comprises N bits, with N being greater than M. In this example, X is signed and Y is unsigned. Compared to the generalisation shown in example 420 of FIG. 4, a compensation value 610 is added. In FIG. 6, the compensation value is a single bit which is added at a position equal to the MSB of X or at position M-1 in 0^{th} indexing. The addition of the compensation value 610 at this position results in the sign extension bits 425 depicted in FIG. 4 at the position of the N-M+1 MSBs of Y being removed. Thus, none of the sign extension bits 425 depicted in FIG. 4 remain.

The addition 620 of X and the M LSBs of Y provides the interim value 630. As input X comprises M bits and the M LSBs of Y comprise M bits, the interim value 530 may be up to 1 bit wider than M. This is similar to the unsigned example 300 depicted in FIG. 3. As X is signed, the addition of X and Y could lead to a negative number. As such, the most significant bit of the interim value 530 is not enough to represent three possible values: negative, zero and positive. To account for three possible outcomes from the addition of X and Y, the carry value 635 is selected to include the 2 MSBs of the interim value 635. As the MSB of the interim value 635 can take the value of 0 or 1 and the second MSB of the interim value 635 can also take the value 0 or 1. This results in four possible carry values: 00, 01, 10 and 11.

To account for the compensation value 610 added at the position of the MSB of X, the same compensation value 610 is deducted from carry value 635 at the same position at which the compensation value 610 was originally added. As the possible values for the carry value 635 were 00, 01, 10 and 11, and as the compensation value 610 was added at the position of the least significant bit of the carry value 635, to obtain an adjusted carry value, the compensation value 610 of 01 is subtracted from the possible carry values. Owing to the adjusted carry value having the potential to be negative and the possible carry values 635 being treated as unsigned, the possible carry values 635 may be conceptually sign extended by an additional bit, which amounts to adding a single padding bit of 0 to each of 00, 01, 10 and 11 to provide 000, 001, 010 and 011. The compensation value 610 of 01 may be conceptually sign extended to 001. When subtracting the extended compensation value 001 from the extended carry bit, the four possible options are: 111, 000, 001 and 010. This adjustment leads of a carry value 635 that can have the value -1, 0, 1 or 2 in 2's complement. However, in the example shown in FIG. 6, when adding the adjusted carry value to the N-M MSBs of Y, only the MSB of the adjusted carry value overlaps the N-M MSBs of Y. Therefore, the effective carry value of 11 is -1, the effective carry value of both 01 and 00 is 0 and the effective carry value of 11 is 1. Therefore, once the compensation has been accounted for, the effective carry value can either have the values -1 ,0 or 1, which is the same as the adjusted carry value described in relation to FIG. 5. An effective carry value of -1 is indicative of a decrease in value of the N-M MSBs of Y, an effective carry value of 0 is indicative of no change to the N-M MSBs of Y and an effective carry value of 1 is indicative of an increase in value of the N-M MSBs of Y.

As the compensation value 610 was added at the position of the MSB of X, and interim value 630 still includes the result of adding the compensation value 610 at the position of the MSB of X, a value equal to the compensation value 610, which is 1 in the example depicted in FIG. 6, is subtracted from the interim value 630 at the position of the MSB of X. This may be done by using an invertor 650 to invert the second MSB of the interim value 630.

Either serially or in parallel to the addition of X and the M LSBs of Y, the N-M MSBs of Y are checked to determine whether there is a risk of integer overflow. For example, if the MSB of Y is 0 and the remaining bits of the N-M MSBs of Y are all 1, there is a risk of positive integer overflow. If the MSB of Y is 1 and the remaining bits of the N-M MSBs of Y are all 0, there is a risk of negative integer overflow.

The effective carry value, the N-M MSBs of Y and the determined risk of integer overflow are provided 640 to logic block 660. If the effective carry value is -1 and there is no determined risk of negative integer overflow, the logic block 660 decrements the N-M MSBs of Y by 1 and this decremented value is used as the N-M MSBs of the output value Z. If the effective carry value is 1 and there is no determined risk of positive integer overflow, the logic block 660 increments the N-M MSBs of Y by the adjusted carry value of 1 and this incremented value is used as the N-M MSBs of Z. Otherwise, the logic block sets the N-M MSBs of Z as the N-M MSBs of Y.

Either in parallel, or serially to, the setting of the N-M MSBs of Z, the M LSBs of Z are determined by logic block 670. The M LSBs of the interim value 630 following the inversion of the second MSB of the interim value 630 and the effective carry value are provided to the logic block 670. If the effective carry value is -1 and there is a determined risk of negative integer overflow, the M LSBs of Z are saturated to all 0s by the logic block 670. If the effective carry value is 1 and there is a determined risk of positive Integer overflow, the M LSBs of Z are saturated to all 1s by the logic block 670. Otherwise, the M LSBs of the interim value 630 following the inversion of the second MSB of the interim value 630 are used directly.

As an alternative to the method described above in relation to FIG. 6, rather than physically adding the compensation value 610 to the sign extended example 420 shown in FIG. 4, the result of the addition of the compensation value 610 may be directly applied to the received inputs X and Y. In this example, no compensation value 610 is added to the received inputs X and Y. As described above, the effect of the compensation value 610 was to remove all sign extension bits 425. Therefore, in this embodiment, no sign extension bits are added in the addition 620.

The addition 620 of X and the M LSBs of Y provides the interim value 630. As input X comprises M bits and the M LSBs of Y comprise M bits, the interim value 530 may be up to 1 bit wider than M. This is similar to the unsigned example 300 depicted in FIG. 3. As X is signed, the addition of X and Y could lead to a negative number. As such, the most significant bit of the interim value 530 is not enough to represent three possible values: negative, zero and positive. To account for three possible outcomes from the addition of X and Y, the carry value 635 is selected to include the 2 MSBs of the interim value 635. As the MSB of the interim value 635 can take the value of 0 or 1 and the second MSB of the interim value 635 can also take the value 0 or 1, this results in four possible carry values: 00, 01, 10 and 11.

To account for the compensation value 610 which was conceptually added at the position of the M LSB of Y, the same compensation value 610 may be conceptually deducted from the determined carry value 635 by creating a mapping of the determined carry value 635 to a true carry value, which is the carry value which would have been determined had the compensation value 610 not been added. As described above, it was shown that the determined carry value of 0 mapped to -1 (i.e. decrement by N-M MSBs of Y by 1), the determined carry values of 1 and 2 mapped to 0 (i.e. no change to the N-M MSBs of Y) and the determined carry value of 3 mapped to 1 (i.e. increment the N-M MSBs of Y by 1).

As the conceptual compensation value 610 was added at the position of the MSB of X, and interim value 630 still includes the result of adding the conceptual compensation value 610 at the position of the MSB of X, a value equal to the compensation value 610, which is 1 in the example depicted in FIG. 6, is subtracted from the interim value 630 at the position of the MSB of X. This may be done by using an invertor 650 to invert the second MSB of the interim value 630.

The determined carry value 635, the N-M MSBs of Y and the determined risk of integer overflow are provided 640 to logic block 660. If the determined carry value is 0 and there is no determined risk of negative integer overflow, the logic block 660 decrements the N-M MSBs of Y by 1 and this decremented value is used as the N-M MSBs of the output value Z. If the determined carry value is 3 and there is no determined risk of positive integer overflow, the logic block 660 increments the N-M MSBs of Y by the adjusted carry value of 1 and this incremented value is used as the N-M MSBs of Z. Otherwise, the logic block sets the N-M MSBs of Z as the N-M MSBs of Y.

Either in parallel, or serially to, the setting of the N-M MSBs of Z, the M LSBs of Z are determined by logic block 670. The M LSBs of the interim value 630 following the inversion of the second MSB of the interim value 630 and the determined carry value 635 are provided to the logic block 670. If the determined carry value is 0 and there is a determined risk of negative integer overflow, the M LSBs of Z are saturated to all 0s by the logic block 670. If the determined carry value 635 is 3 and there is a determined risk of positive integer overflow, the M LSBs of Z are saturated to all 1s by the logic block 670. Otherwise, the M LSBs of the interim value 630 following the inversion of the second MSB of the interim value 630 are used directly.

By using the result of how the addition of the inputs X and Y is changed by adding the conceptual compensation bit 610 and mapping the determined carry value 635 to a true carry value which would have been obtained had the conceptual compensation bits not been added, the hardware logic used in the present technology is reduced as an adder is not used to physically add and subtract the compensation bit 610.

Whilst FIGs. 5 and 6 depict the use of a compensation value 510, 610 equal to a single bit of value 1, compensation values of different values and different numbers of bits may be used provided that the value of the compensation bit is subtracted prior to calculation of the output Z.

The examples provided in FIGs. 5 and 6 both provide critical path and memory improvements over known methods of providing saturation logic. In some examples, the example provided in FIG. 5 may provide a greater reduction in delays. For example, where estimate values have been pre-computed for the N-M MSBs of Z, the example of FIG. 5 may be quicker than the example provided in FIG. 6 as the MSB of the interim value 530 does not need to be inverted via an invertor. In other examples, the example provided in FIG. 6 may be quicker than the example of FIG. 5 where the N-M MSBs of Z still need to be calculated as the calculated carry value 635 is smaller.

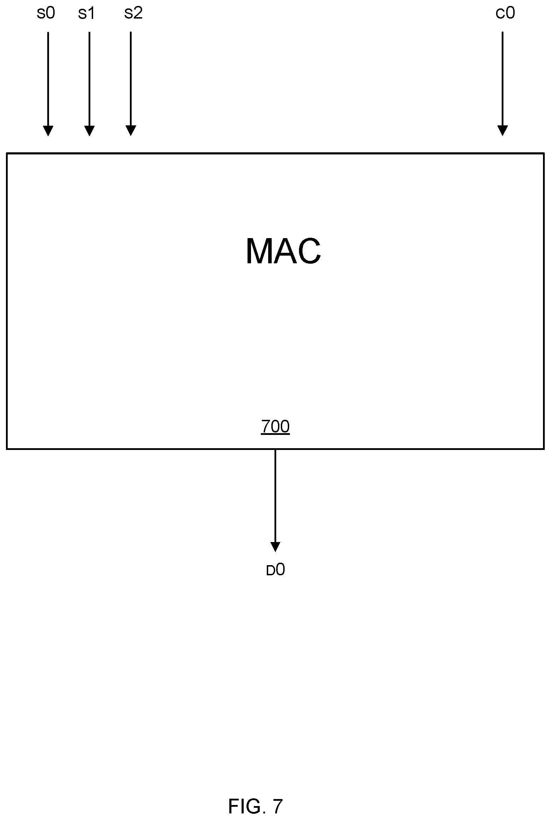

FIG. 7 shows a schematic diagram for adding together inputs of different width in a multiply-accumulator (MAC) component 700. In FIG. 7, three inputs are received: s0, s1 and s2. The MAC component additionally receives control logic c0. In an example, the elements of vector s0 may be signed or unsigned, as determined by a control bit included in control logic c0. Similarly, elements of vector s1 may be signed or unsigned, as determined by a different control bit in control logic c0. s2 does not have its own control bit, but if either s0 or s1 are signed, then s2 will automatically be signed. Control logic comprises logic which indicates whether each input is signed or unsigned. Any of s0, s1 or s2 can be signed or unsigned based on the control logic. The MAC component 700 is configured to multiply vectors s0 and s1 together as a dot product and add the value of the multiplication of s0 and s1 to s2 to provide output d0. The width of input s2 is wider than the width of the multiplication of s0 and s1.

The technology described herein may be implemented on components such as the MAC component 700 depicted in FIG. 7 when adding together the result of a multiplication, such as s0*s1) to a larger value, such as s2, to obtain an output, such as d0. The output d0 may be used for a subsequent operation, may be written to a memory location or may be fed back into the MAC component 700 as the next input s2. The MAC component 700 may also be used with the present technology in a neural network accelerator. For example, input s0 could represent a vector of weights, input s1 could represent a vector of values and s2 could represent a bias or an accumulated value of previous MAC operations. The MAC component 700 may also be used in a general purpose processor such as a central processing unit (CPU) or a graphics processing unit (GPU) to perform matrix multiplications, such as coordinate transformations.

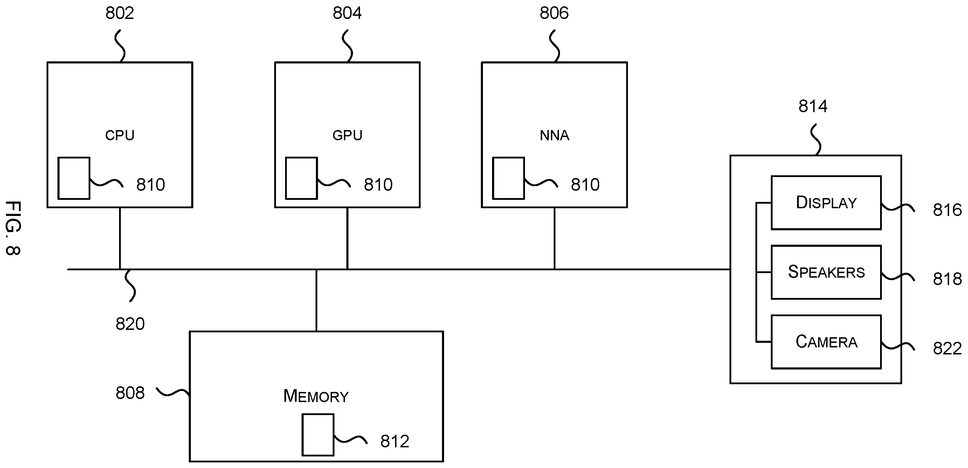

Figure 8 shows a computer system in which the graphics processing systems described herein may be implemented. The computer system comprises a CPU 802, a GPU 804, a neural network accelerator (NNA) 806, a memory 808, and other devices 814, such as a display 816, speakers 818 and a camera 822. A processing block 810 (corresponding to processing blocks comprising the blocks of FIG. 2) may be implemented on the CPU 802, the GPU 804 and/or the NNA 806. In other examples, one or more of the depicted components may be omitted from the system. The components of the computer system can communicate with each other via a communications bus 820. A store 812 is implemented as part of the memory 808.

The apparatus of FIG. 2 is shown as comprising a number of functional blocks. This is schematic only and is not intended to define a strict division between different logic elements of such entities. Each functional block may be provided in any suitable manner. It is to be understood that intermediate values described herein as being formed by an apparatus need not be physically generated by the apparatus at any point and may merely represent logical values which conveniently describe the processing performed by the apparatus between its input and output.

The apparatus described herein may be embodied in hardware on an integrated circuit. The apparatus described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture an apparatus configured to perform any of the methods described herein, or to manufacture an apparatus comprising any apparatus described herein. An integrated circuit definition dataset may be, for example, an integrated circuit description.

Therefore, there may be provided a method of manufacturing, at an integrated circuit manufacturing system, an apparatus as described herein. Furthermore, there may be provided an integrated circuit definition dataset that, when processed in an integrated circuit manufacturing system, causes the method of manufacturing an apparatus to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

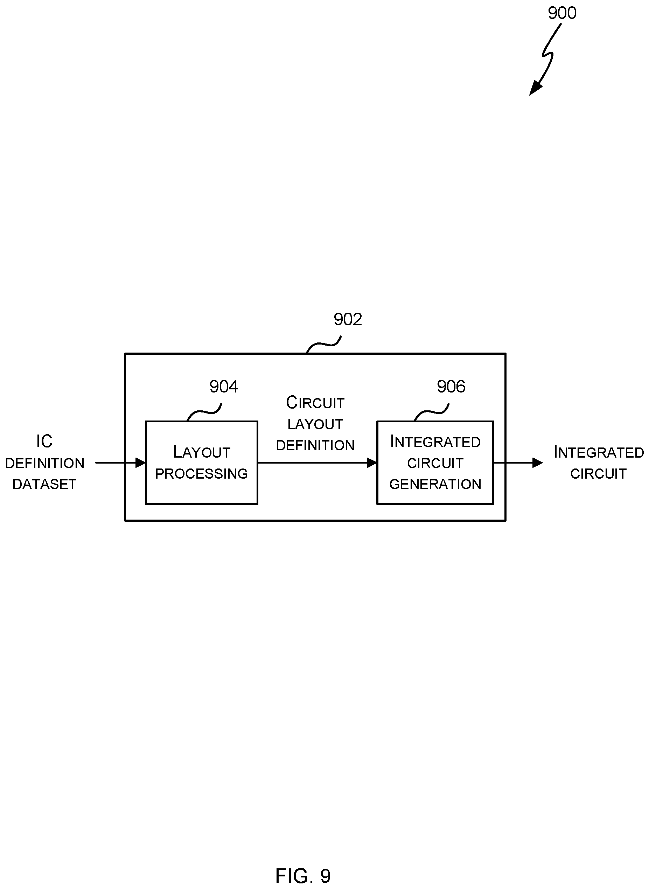

An example of processing an integrated circuit definition dataset at an integrated circuit manufacturing system so as to configure the system to manufacture an apparatus will now be described with respect to Figure 9.

Figure 9 shows an example of an integrated circuit (IC) manufacturing system 902 which is configured to manufacture an apparatus as described in any of the examples herein. In particular, the IC manufacturing system 902 comprises a layout processing system 904 and an integrated circuit generation system 906. The IC manufacturing system 902 is configured to receive an IC definition dataset (e.g. defining an apparatus as described in any of the examples herein), process the IC definition dataset, and generate an IC according to the IC definition dataset (e.g. which embodies an apparatus as described in any of the examples herein). The processing of the IC definition dataset configures the IC manufacturing system 902 to manufacture an integrated circuit embodying an apparatus as described in any of the examples herein.

The layout processing system 904 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 904 has determined the circuit layout it may output a circuit layout definition to the IC generation system 906. A circuit layout definition may be, for example, a circuit layout description.

The IC generation system 906 generates an IC according to the circuit layout definition, as is known in the art. For example, the IC generation system 906 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 902 may be implemented all in one location, e.g. by one party. Alternatively, the IC manufacturing system 902 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture an apparatus without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 9 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 9, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method (100) of adding a first input and a second input in hardware logic to determine an output value, the method comprising:
receiving (110) the first input comprising a first number of bits and the second input comprising a second number of bits, wherein the second input is wider than the first input;
adding (120) the first input to the first number of least significant bits of the second input to determine a carry value;
determining (130), using a third number of most significant bits of the second input, whether there is a risk of integer overflow, wherein the third number is equal to the first number subtracted from the second number;
using the determined carry value and the determined risk of overflow, determining (140) whether the addition of the first input and the second input will cause integer overflow; and
in response to determining that the addition will cause integer overflow (145A), determine (150) the output value,
wherein the output value comprises the second number of bits,
wherein the third number of most significant bits of the second input is used as the third number of most significant bits of the output value, and
wherein the first number of least significant bits of the output value are saturated using the determined risk of integer overflow.

2. The method of claim 1, wherein adding the first input to the first number of least significant bits of the second input to determine a carry value and determining whether there is a risk of integer overflow are performed in parallel (125A).

3. The method of claims 1 or 2, further comprising:
in response to determining that the addition will not cause integer overflow (145B), determining (160) the output value,
wherein the output value comprises the second number of bits,
wherein the third number of most significant bits of the second input is adjusted using the carry value to provide the third number of most significant bits of the output value, and
wherein the first number of least significant bits of the addition of the first input and the first number of least significant bits of the second input are used as the first number of least significant bits of the output value.

4. The method of claims 1 or 2, further comprising:
determining a first estimated value, wherein the first estimated value comprises the third number of bits, wherein the first estimated value is equal to the third number of most significant bits of the second input;
determining a second estimated value, wherein the second estimated value comprises the third number of bits and wherein the second estimated value is equal to the first estimated value incremented by 1 at the least significant bit of the second estimated value;
determining a third estimated value, wherein the third estimated value comprises the third number of bits and wherein the third estimated value is equal to the first estimated value decremented by 1 at the least significant bit of the third estimated value;
in response to determining that there is no risk of positive integer overflow and the carry value corresponds to an increase, using the second estimated value as the third number of most significant bits of the output value;
in response to determining that there is no risk of negative integer overflow and the carry value corresponds to a decrease, using the third estimated value as the third number of most significant bits of the output value; and
otherwise, using the first estimated value as the third number of most significant bits of the output value.

5. The method of any preceding claim, wherein the first input is a signed input.

6. The method of claim 5, wherein adding the first input (X) to the first number of least significant bits of the second input (Y) to determine the carry value (535) further comprises adding a residual sign extension bit (515) to the first input (X) and the first number of least significant bits of the second input and wherein the method further comprises:
mapping the determined carry value (535) to a predetermined mapping of carry values, wherein the predetermined mapping of carry values indicates a value to be added to the third number of most significant bits of the second input (Y); and
using the indicated value from the mapped determined carry value and the determined risk of overflow to determine the output value (Z).

7. The method of claim 5, further comprising:
mapping the determined carry value (635) to a predetermined mapping of carry values, wherein the predetermined mapping of carry values indicate a value to be added to the third number most significant bits of the second value (Y);
inverting (650) a second most significant bit of the addition of the first input (X) and the first number least significant bits of the second input (Y);
using the indicated value from the mapped determined carry value, the determined risk of overflow and the inverted addition of the first input and the first number least significant bits of the second input to determine the output value (Z).

8. The method of claim 5, wherein the method, wherein adding the first input (X) to the first number of least significant bits of the second input (Y) to determine the carry value (535, 635) further comprises adding a compensation value (510, 610) to a sign-extended first input (X) and the first number of least significant bits of the second input (Y); and
wherein using the determined carry value (535, 635) and the determined risk of integer overflow to determine whether the addition will cause integer overflow comprises subtracting the compensation value (510, 610) from the determined carry value (535, 635).

9. The method of claim 8, wherein the compensation value (510) is added at a position equal to the first number +1 least significant bit of the first input and wherein the compensation value (510) is subtracted from the determined carry value (535) at the position to determine an adjusted carry value.

10. The method of claim 8, wherein the compensation value (610) is added at a position equal to the first number least significant bit of the first input and wherein the compensation value (610) is subtracted from the determined carry value (535) at the position to determine an adjusted carry value.

11. The method of claims 1 to 10, wherein the first input is a dot product of two vector inputs (s0, s1).

12. The method of claims 1 to 10, wherein the first input is a sum of a plurality of other inputs.

13. The method of any preceding claim, further comprising:
using the output value (d0) as the second input (s2) in a subsequent addition of the first input (s0, s1) and second input (s2).

14. An apparatus (200), comprising:
a first hardware logic block (210), wherein the first hardware logic block is configured to receive a first input (202) comprising a first number of bits and a second input (204) comprising a second number of bits, wherein the second input (204) is wider than the first input (202), wherein the first hardware logic block (210) is configured to provide the first input (212) and first number of least significant bits of the second input (214) to an adder (220), wherein the hardware logic block is configured to provide a third number of most significant bits of the second input (216) to a first determining block (230), wherein the third number is equal to the first number subtracted from the second number;
the adder (220), wherein the adder (220) is configured to add the first input (212) to the first number of least significant bits of the second input (214) to determine a carry value (222) and wherein the adder (220) is configured to provide the carry value (222) to a second determining block (240);
the first determining block (230), wherein the first determining block (230) is configured to receive the third number of most significant bits of the second input (216), wherein the first determining block (230) is configured to determine a risk of integer overflow (232) from the third number of most significant bits of the second input (216), and wherein the first determining block is configured to provide the determined risk of integer overflow (232) to the second determining block (240);
the second determining block (240), wherein the second determining block (240) is configured to receive the determined carry value (222) and the determined integer overflow risk (232), wherein the second determining block (240) is configured to use the determined carry value (222) and the determined integer overflow risk (232) to determine whether integer overflow will occur, wherein in response to determining that integer overflow will occur (242), the second determining block (240) is configured to provide an indication to a third determining block (250) that integer overflow will occur;
the third determining block (250), wherein the third determining block (250) is configured to determine an output value (252) of the addition of the first input (202) and the second input (204), wherein the output value (252) comprises the second number of bits, wherein the third determining block (250) is configured to use third number of most significant bits of the second input (216) as the third number of most significant bits of the output value (252), wherein the third determining block (250) is configured to saturate the first number of least significant bits of the output value (252) using the determined risk of integer overflow (232) and wherein the third determining block is configured to provide the output value (252) to a second hardware logic block (260); and
the second hardware logic block (260), wherein the second hardware logic block (260) is configured to receive the output value (252) from the third determining block (250).

15. Computer-readable code configured to cause the method of any of claims 1 to 13 to be performed when the code is run.
